(19) Europäisches Patentamt / European Patent Office / Office européen des brevets

(11) **EP 4 414 146 A1**

(12) **EUROPÄISCHE PATENTANMELDUNG**

(43) Veröffentlichungstag:
**14.08.2024   Patentblatt 2024/33**

(21) Anmeldenummer: **23156396.6**

(22) Anmeldetag: **13.02.2023**

(51) Internationale Patentklassifikation (IPC):
**B26D 7/01** (2006.01)          **B26D 7/06** (2006.01)
**B26D 5/00** (2006.01)          **B26D 5/32** (2006.01)
**B26D 5/34** (2006.01)          **B26D 1/04** (2006.01)
**G06F 18/00** (2023.01)

(52) Gemeinsame Patentklassifikation (CPC):
**B26D 7/015; B26D 1/04; B26D 5/007; B26D 5/32; B26D 5/34; B26D 7/0608; G06F 18/2413; G06T 7/0004**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **POLAR-Mohr Beteiligungs GmbH**
**65719 Hofheim am Taunus (DE)**

(72) Erfinder:
• **FRANKE, Markus**
  **D-65195 Wiesbaden (DE)**
• **SEIDL, Frank**
  **D-63303 Dreieich (DE)**

(74) Vertreter: **Franke, Markus et al**
**Patentanwälte Sturm Weilnau Franke**
**Partnerschaft mbB**
**Unter den Eichen 5 (Haus C-Süd)**
**65195 Wiesbaden (DE)**

(54) **VERFAHREN ZUM KORRIGIEREN EINER AUSRICHTUNG EINER SCHNEIDLAGE SOWIE SCHNEIDMASCHINE**

(57)   Die Erfindung betrifft ein Verfahren zum Korrigieren einer Ausrichtung einer Schneidlage (2) aus gestapelten, blattförmigen Gut in Form von Bögen zu einer Schneidebene (5) eines Schneidmessers (6) einer Schneidmaschine (1). Ferner betrifft die Erfindung ein Schneidmaschine (1). Es ist vorgesehen, dass die Schneidmaschine (1) einen Vorschubsattel (4) zum Verschieben der Schneidlage (2) in Richtung der Schneidebene (5) des Schneidmessers (6) aufweist, wobei der Vorschubsattel (4) in seiner Ausrichtung zu der Schneidebene (5) verstellbar ist zur Veränderung der Ausrichtung der an dem Vorschubsattel (4) anliegenden Schneidlage (2) zu der Schneidebene (5). Ferner ist der jeweilige Bogen mit zumindest einer Schneidtestmarke (16) versehen, wobei die jeweilige Schneidtestmarke (16) eine sich in Vorschubrichtung (X) des Vorschubsattels (4) verändernde Farbgebung aufweist.

Fig. 1

EP 4 414 146 A1

**Beschreibung**

Die Erfindung betrifft ein Verfahren zum Korrigieren einer Ausrichtung einer Schneidlage aus gestapelten, blattförmigen Gut in Form von Bögen zu einer Schneidebene eines Schneidmessers einer Schneidmaschine, insbesondere einer Schneidmaschine, die als Planschneidmaschine und/oder als Schnellschneidmaschine ausgebildet ist. Ferner betrifft die Erfindung ein Schneidmaschine, insbesondere eine Schneidmaschine, die als Planschneidmaschine und/oder als Schnellschneidmaschine ausgebildet ist.

Eine Schneidmaschine ist beispielsweise aus der EP 2 656 984 B1 bekannt. Die in der EP 2 656 984 B1 beschriebene Schneidmaschine ist als Planschneidmaschine ausgebildet. Diese weist ein Grundgestell, das den Tisch aufnimmt, auf, ferner ein in dem Grundgestell gelagerten Portalrahmen, in dem das Schneidmesser gelagert ist. Vor dem Schnitt wird die auf dem Tisch aufliegende Schneidlage aus blattförmigen, gestapelten Gut mittels eines Pressbalkens gegen die dem Stapel zugewandte Oberfläche des Tisches gepresst und es erfolgt dann der Schnitt mittels des Schneidmessers. Um die Schneidlage in dem Bereich einer Schneidebene des Schneidmessers der Schneidmaschine zu bringen, weist die Schneidmaschine einen Vorschubsattel auf, wobei dieser Vorschubsattel um eine vertikale Achse drehbar und um eine horizontale Achse neigbar ist zur Ausrichtung der Schneidlage bzw. eines auf den Bögen aufgedruckten Druckbilds zu der Schneidebene des Schneidmessers. Ferner weist die Schneidmaschine Mittel zum Drehen und Neigen des Vorschubsattels auf. Da die Schneidlage an dem Vorschubsattel anliegt, kann durch Drehen und Neigen des Vorschubsattels die Ausrichtung Schneidlage zu der Schneidebene verändert und somit etwaige Abweichungen der Ausrichtung von einer Soll-Ausrichtung korrigiert werden. Durch eine Veränderung der Neigung können Abweichungen in der Lage des Schnitts über die Höhe des Stapels, somit ein Unterschnitt oder Überschnitt, korrigiert werden. Durch eine Veränderung der Drehstellung können Abweichungen in der Lage des Schnitts über die Quererstreckung des Stapels korrigiert werden. Eine derartige Drehkorrektur oder Neigekorrektur des Vorschubsattels erfolgt derzeit häufig über eine visuelle qualitative Bewertung des Schnittbilds von beschnittenen Markierungen durch den Maschinenbediener und entsprechende manuelle, durch den Maschinenbediener durchgeführte Korrekturen der Drehstellung bzw. Neigestellung des Vorschubsattels. Nachteilig bei dieser durch den Maschinenbediener durchgeführten Korrektur der Drehstellung bzw. Neigestellung des Vorschubsattels ist, dass die Bewertung des Schnittbilds und die daraus abzuleitenden, vorzunehmenden Veränderungen der Drehstellung und/oder Neigestellung des Vorschubsattels relativ zeitintensiv sind und Erfahrungswerte des Maschinenbedieners mit der entsprechenden Schneidmaschine notwendig sind, um eine zuverlässige Korrektur der Ausrichtung des Vorschubsattels vornehmen zu können. Ferner ist ein durch einen Maschinenbediener durchgeführtes Korrekturverfahren stets fehlerbehaftet bzw. es können aufgrund einer Fehlbedienung Fehler auftreten. Eine Automatisierung des Korrekturverfahrens ist zudem Voraussetzung für die Automatisierung des kompletten Schneideprozesses.

In der DE 10 2017 112 754 A1 wird ein Verfahren zum Schneiden von streifenförmigen Nutzen mittels einer Schneidmaschine beschrieben, die einen verstellbaren Vorschubsattel aufweist. Dabei sind auf den Bögen Markierungen aufgebracht, wobei die Schneidlage im Bereich der Markierungen durchschnitten wird, wodurch die Markierungen stirnseitig sichtbar werden. Dann wird an der Stirnseite ein Abstand dieser Markierungen zu einer Referenz gemessen, wobei bei Abweichung dieses Abstands von einem Referenzwert der Vorschubsattel verstellt wird. Problematisch bei diesem Verfahren ist, dass eine solche Abstandsmessung aufwendig und fehleranfällig ist.

Aufgabe der vorliegenden Erfindung ist es, ein Verfahren sowie eine Schneidmaschine anzugeben, bei denen etwaige Abweichungen in der Ausrichtung der Schneidlage zu der Schneidebene des Schneidmessers besonders zuverlässig ermittelt und notwendige Korrekturen vorgenommen werden können.

Diese Aufgaben werden durch ein Verfahren, das die Merkmale des Anspruchs 1 aufweist, und durch eine Schneidmaschine, die die Merkmale des Anspruchs 12 aufweist, gelöst.

Das Verfahren dient zum Korrigieren einer Ausrichtung einer Schneidlage aus gestapelten, blattförmigen Gut in Form von Bögen zu einer Schneidebene eines Schneidmessers einer Schneidmaschine. Die Schneidmaschine weist einen Tisch zur Aufnahme der Schneidlage und einen Vorschubsattel zum Verschieben der Schneidlage in Richtung der Schneidebene des Schneidmessers der Schneidmaschine auf. Der Vorschubsattel ist in seiner Ausrichtung zu der Schneidebene verstellbar zur Veränderung der Ausrichtung der an dem Vorschubsattel anliegenden Schneidlage zu der Schneidebene. Der jeweilige Bogen ist mit zumindest einer Schneidtestmarke versehen, wobei die jeweilige Schneidtestmarke eine sich in der Vorschubrichtung des Vorschubsattels verändernde Farbgebung aufweist. Das Verfahren weist die folgenden Verfahrensschritte auf:

a) Verschieben der Schneidlage mittels des Vorschubsattels in Richtung der Schneidebene des Schneidmessers, derart, dass die Schneidebene die Schneidtestmarken schneidet,

b) Schneiden der Schneidlage mit dem Schneidmesser zur Bildung einer beschnittenen Stirnseite mit einem durch die durchschnittenen Schneidtestmarken gebildeten stirnseitig sichtbaren farbigen Muster,

c) Ermitteln einer Farbgebung des stirnseitig sichtbaren Musters,

d) Ermitteln, ob Abweichungen der Ausrichtung der Schneidlage von einer Soll-Ausrichtung vorliegen, wobei das Ermitteln anhand der Farbgebung des stirnseitig sichtbaren Musters erfolgt, wobei bei Vorliegen von Abweichungen die Ausrichtung des Vorschubsattels zu der Schneidebene verändert wird zum Korrigieren der Ausrichtung der Schneidlage.

Aufgrund des farbigen Musters, welches durch die beschnittenen Schneidtestmarken stirnseitig gebildet ist, können Abweichungen der Ausrichtung der Schneidlage bezüglich der Schneidebene auf einfache Art und Weise ermittelt werden, da die Farbgebung des gebildeten Musters durch den Verlauf des Schnitts durch die Schneidlage und somit durch die Schneidtestmarken bestimmt ist. Der Verlauf des Schnitts ist wiederum durch die Ausrichtung der Schneidlage zu der Schneidebene bestimmt. Je nach Abweichung der Ausrichtung der Schneidlage zu der gewünschten Soll-Ausrichtung der Schneidlage, weist die Farbgebung des durch die durchschnittenen Schneidtestmarken gebildeten Musters charakteristische Merkmale auf. Beispielsweise weist die Farbgebung bei einer Abweichung der Ausrichtung in Form eines Neigungsfehlers eine Veränderung in Hochrichtung bzw. Stapelrichtung des Schneidlage auf. Insofern weist eine sich in Stapelrichtung verändernde Farbgebung des Musters in Stapelrichtung des Stapels auf einen Unterschnitt bzw. einen Überschnitt hin. Unter dem Begriff "Überschnitt" wird vorliegend insbesondere ein Schneidfehler verstanden, bei dem der obere Bogen in der Schneidlage maßhaltig ist und die unteren Bögen nach dem Schnitt zu lang sind. Sind die unteren Bögen in der Schneidlage zu kurz, wird entsprechend vom Schneidfehler "Unterschnitt" gesprochen. Wenn hingegen die Farbgebung über die gesamte Höhe der Schneidlage homogen ist bzw. einfarbig ist, werden die Schneidtestmarken jeweils an derselben Position in Vorschubrichtung durchschnitten, wodurch sich das einfarbige Muster ergibt. Somit kann bei einer Farbgebung, die in Stapelrichtung keine Veränderung aufweist, darauf geschlossen werden, dass kein Neigungsfehler der Schneidlage zu der Schneidebene vorliegt. Entsprechendes gilt für eine Abweichung in der Drehstellung der Schneidlage zu der Schneidebene.

Aufwändige und fehleranfällige Abstandsmessungen sind somit grundsätzlich nicht erforderlich, um etwaige Abweichungen der Ausrichtung von der Soll-Ausrichtung zu ermitteln. Eine Farbgebung kann schnell und zuverlässig, beispielsweise mittels eines computergestützten Bildverarbeitungsprogramms, ermittelt und ausgewertet werden, wodurch ein hoher Automatisierungsgrad erreicht werden kann. Aufwendige Eichungen zwecks exakter Abstandsmessung sind nicht erforderlich. Auch sind Toleranzen eines etwaigen Bildsensors, der der Erfassung des Musters dient, unproblematisch für die Ermittlung, ob Abweichungen vorliegen, da die Auswertung anhand der Abweichung in der Farbgebung erfolgt. Ferner wirken sich perspektivische Verzerrungen nicht negativ aus oder sind zumindest von untergeordneter Bedeutung.

Hinsichtlich der Soll-Ausrichtung des Stapels sei in diesem Zusammenhang auch darauf hingewiesen, dass sich die Soll-Ausrichtung des Stapel auch insbesondere auf ein auf dem jeweiligen Bogen aufgebrachtes Druckbild des jeweiligen Bogens beziehen kann. Wenn das Druckbild auf dem jeweiligen Bogen nicht exakt auf dem Bogen ausgerichtet ist, beispielsweise zu einer unbeschnittenen Vorderkante ausgerichtet ist, kann diese nicht exakte Ausrichtung des Druckbilds auf dem Bogen durch eine entsprechende Ausrichtung der Schneidlage zu der Schneidebene kompensiert werden.

Vorzugsweise erfolgen zumindest die Verfahrensschritte b), c) und d) automatisiert. Vorzugsweise erfolgen die die Verfahrensschritte b), c) und d) computergestützt.

Als besonders vorteilhaft wird es angesehen, wenn nach dem Verfahrensschritt d) die Verfahrensschritte a) bis d) zumindest einmal erneut durchgeführt werden. Dadurch wird eine Kontrolle der vorgenommenen Korrekturen durchgeführt und etwaige Überkorrekturen können wiederum korrigiert werden.

Vorzugsweise wird die zumindest eine Schneidtestmarke auf den jeweiligen Bogen aufgedruckt. Dabei wird es als besonders vorteilhaft angesehen, wenn die zumindest eine Schneidtestmarke gemeinsam mit einem durch entsprechendes Schneiden mit der Schneidmaschine freizustellenden Druckbild auf den jeweiligen Bogen gedruckt wird. Dadurch ist die Ausrichtung der Schneidtestmarke auf dem Bogen identisch mit der Ausrichtung des Druckbilds.

Vorzugsweise wird das stirnseitig sichtbare Muster der an dem Vorschubsattel anliegenden beschnittenen Schneidlage verwendet. In diesem Zusammenhang wird es als vorteilhaft angesehen, wenn die Schneidmaschine einen Pressbalken aufweist, der die Schneidlage beim Schneiden an den Tisch anpresst, wobei die Farbgebung des Musters in einem Zustand der Schneidlage ermittelt wird, bei dem der Pressbalken an die Schneidlage angepresst ist. Zu diesem Zweck ist es durchaus denkbar, dass in dem angepressten Zustand das stirnseitige Muster mit einem Bildsensor, beispielsweise einem Bildsensor einer Kamera, erfasst wird und anhand des von dem Bildsensor erfassten Bilds die Farbgebung des Musters ermittelt wird.

Vorzugsweise weisen die Schneidtestmarken einen sich in Vorschubrichtung des Vorschubsattels verändernden Querschnitt auf. Dadurch kann zusätzlich zu der Ermittlung der Ausrichtung anhand der Farbgebung eine Ermittlung anhand einer Geometrie des Musters erfolgen.

In einer bevorzugten Ausführungsform ist der Vorschubsattel um eine senkrecht zu einer von dem Tisch aufgespannten Ebene verlaufenden ersten Achse drehbar zur Veränderung eines Drehwinkels des Vorschubsattels bezüglich der Schneidebene.

Als besonders vorteilhaft wird es angesehen, wenn der Vorschubsattel um eine parallel zu der von dem Tisch aufgespannten Ebene verlaufenden zweiten Achse drehbar ist zur Veränderung eines Neigungswinkels des Vorschubsattels bezüglich der Schneidebene.

Vorzugsweise weist die jeweilige Schneidtestmarke zumindest zwei in Vorschubrichtung des Vorschubsattels hintereinander angeordnete einfarbige Abschnitte auf, wobei in der Vorschubrichtung benachbarte Abschnitte sich in ihrer Farbe unterscheiden. Als besonders vorteilhaft wird es angesehen, wenn die jeweilige Schneidtestmarke zumindest drei farbige Abschnitte in drei unterschiedlichen Farben aufweist. Vorzugsweise ist erster Abschnitt der drei Abschnitte blau oder schwarz, ein zweiter Abschnitt der drei Abschnitte gelb und ein dritter Abschnitt der drei Abschnitte rot. Dadurch wird eine gute Kontrastwirkung zwischen den Abschnitten erreicht, wodurch die Ermittlung von Abweichungen erleichtert wird, da dann bei einer etwaigen Abweichung der Ausrichtung auch eine hohe Kontrastwirkung in der Farbgebung des Musters vorliegt.

Vorzugsweise sind die Abschnitte rechteckförmig, insbesondere streifenförmig ausgebildet.

Vorzugsweise weisen die Abschnitte in Vorschubrichtung des Vorschubsattels jeweils eine Erstreckung von zumindest 0,05 mm, vorzugsweise von 0,05 mm bis 2 mm, bevorzugt von 0,05 mm bis 0,5 mm auf. In einer besonders bevorzugten Ausführungsform weisen die Abschnitte in Vorschubrichtung des Vorschubsattels jeweils eine Erstreckung von 0,05 mm bis 0,2 mm auf. Diese Abmessungen haben sich hinsichtlich einer noch tolerierbaren Abweichung von der Soll-Ausrichtung als vorteilhaft erwiesen. Zudem können durch diese Erstreckung Toleranzen in der Ausrichtung des Druckbilds auf dem jeweiligen Bogen und/oder Toleranzen in der Ausrichtung der einzelnen Bogen der Schneidlage ausgeglichen werden, die ansonsten eine Auswertung der Farbgebung des Musters erschweren würden.

Es wird als besonders vorteilhaft angesehen, wenn die Schneidlage derart in die Schneidebene verschoben wird, dass die Schneidebene bezogen auf den obersten Bogen einen der Abschnitte mittig schneidet. In einem solchen Fall weist das Muster eine sich in Stapelrichtung verändernde Farbgebung auf, wenn die Abweichung der Schnittposition zwischen dem obersten Bogen und dem untersten Bogen größer ist als die halbe Erstreckung dieses Abschnitts.

Die Verwendung von Abschnitten unterschiedlicher Farbe ist auch dahingehend vorteilhaft, dass eine notwendige Korrektur des Neigungswinkels durch einfaches Abzählen der Bereiche unterschiedlicher Farbe in dem Muster erfolgen kann. Da der Abstand der Mitten der einzelnen Abschnitte zueinander und/oder die Erstreckung der einzelnen Abschnitte bekannt ist, kann bei bekannter Stapelhöhe die notwendige Winkelkorrektur, um einen zu der Schneidlage senkrechten Schnitt zu erreichen, über den geometrischen Zusammenhang dieser Größen ermittelt, insbesondere berechnet werden, beispielsweise in guter Näherung über die Formel

$$\varphi = arctan\frac{(N-1) \times A}{H}$$

wobei

$\varphi$ : notwendige Neigungswinkelkorrektur bzw. Winkelabweichung in der Neigung
N: Anzahl der Bereiche unterschiedlicher Farbe in dem Muster in der Stapelrichtung
A: Abstand der Mitten benachbarter Abschnitte in der Schneidtestmarke in der Vorschubrichtung
H: Stapelhöhe der Schneidlage

Wenn ich drei unterschiedliche Farben erkannt werden, kann aus dem Zusammenhanf des Aufbaus des Testmusters, beispielsweise wenn die Abschnitte jeweils eine Erstreckung von 0,05 mm in Vorschubrichtung aufweisen und in Vorschubbrichtung unmittelbar aneinander angrenzen, darauf geschlossen werden, dass eine Abweichung von mindestens 2 x 0,05 mm über die Schnitthöhe vorliegt - ohne dass aufwendig optisch über eine Pixelauswertung der Abstand der Referenzpositionen "gemessen" werden muss.

Die Ermittlung bzw. Berechnung der notwendigen Winkelkorrektur über die Anzahl der Bereiche unterschiedlicher Farbe ist aufgrund der Ausdehnung der farbigen Abschnitte mit einer gewissen Unsicherheit bzw. einem Fehlerbereich behaftet. Es hat sich aber gezeigt, dass nach der entsprechenden Winkelkorrektur trotz des Fehlerbereichs eine ausreichend gute Ausrichtung der Schneidlage erreicht wird. Somit kann über ein einfaches Abzählen der Bereiche unterschiedlicher Farbe und somit besonders schnell und mit geringem Aufwand eine notwendige Winkelkorrektur mit ausreichender Güte ermittelt bzw. berechnet werden.

Hinsichtlich einer Ausführungsform mit Abschnitten wird es als vorteilhaft angesehen, wenn die Schneidtestmarke vier oder mehr Abschnitte aufweist, um die Genauigkeit zu erhöhen.

Über die Abfolge der farbigen Bereiche in Stapelrichtung kann durch einen Vergleich mit der Abfolge der farbigen Abschnitte in der Schneidtestmarke beurteilt werden, ob ein Unterschnitt oder ein Überschnitt vorliegt und somit in welche Richtung die Korrektur erfolgen muss.

Vorzugsweis ist die Erstreckung der einzelnen einfarbigen Abschnitte der Schneidtestmarke in Vorschubrichtung identisch.

Vorzugsweise weist die Schneidtestmarke, insbesondere der jeweilige einfarbige Abschnitt, in einer parallel zu der Schneidebene verlaufenden Querrichtung eine Breitenerstreckung von zumindest 5 mm auf, wodurch die Erfassung und Auswertung des Musters erleichtert wird.

Es wird als besonders vorteilhaft angesehen, wenn in Vorschubrichtung benachbarte Abschnitte hinsichtlich ihrer Anordnung in Querrichtung unterscheiden, insofern in der Querrichtung zueinander versetzt angeordnet sind. Ein solcher Versatz ist dahingehend als vorteilhaft anzusehen, dass die Bereiche unterschiedlicher Farben im Bereich der beschnittenen Stirnkante dann auch einen entsprechenden Versatz in der Querrichtung aufweist, was die Auswertung des stirnseitigen Musters erleichtert. Zudem kommen durch eine derartige in Querrichtung gestaffelte Anordnung Toleranzen in der Passergenauigkeit des Druckbildes weniger zum Tragen. So ist es durchaus denkbar, dass bei in Vorschubrichtung schmalen Streifen, beispielsweise im Bereich von 0,05mm und einer Passergenauigkeit (Bildschwankungen beim Druck in Laufrichtung) in gleicher Größenordnung, der Testschnitt mal durch den einen mal durch den anderen Farbstreifen geht, was erfahrungsgemäß zu einer Mischfarbe in der beschnittenen Stirnseite führen würde. Hat man zusätzlich eine seitlich unterschiedliche Ausdehnung der Streifen, gibt es immer eine eindeutige Farbzuordnung.

Vorzugsweise beträgt ein solcher Versatz zwischen 1 mm und 10 mm.

Vorzugsweise ist ein solcher Versatz der Abschnitte in Querrichtung in etwa identisch mit der Breitenerstreckung des jeweiligen Abschnitts. Insbesondere sind die Abschnitt treppenstufenartig angeordnet. Es ist durchaus denkbar, dass die Abschnitte in Querrichtung derart zueinander versetzt angeordnet sind, das kein Überlapp in der Querrichtung zwischen den Abschnitten besteht. Ein Versatz in Querrichtung.

Es wird als vorteilhaft angesehen, wenn in der Vorschubrichtung benachbarte einfarbige Abschnitte sich in ihrer Quererstreckung unterscheiden. Dadurch ergibt sich in dem Muster dann zusätzlich zu dem Farbunterschied der entsprechenden Bereiche ein Unterschied in der Quererstreckung. Dadurch wird das Erkennen von Bereichen unterschiedlicher Farbe erleichtert. Dies ist insbesondere dahingehende relevant, dass die Bereiche unterschiedlicher Farbe in der Regeln nicht scharf getrennt sein werden, sondern aufgrund von Toleranzen ineinander übergehen werden. Durch den Farbübergang wird unter anderem die Ermittlung einer Lage der Grenze zwischen den Bereichen unterschiedlicher Farbe erschwert. In einem solchen Fall kann die Geometrie des Musters als weiteres Unterscheidungskriterium herangezogen werden.

Als besonders vorteilhaft wird es angesehen, wenn benachbarte einfarbige Abschnitte unmittelbar aneinander angrenzen.

Hinsichtlich der einfarbigen Abschnitte ist es durchaus denkbar, dass diese ineinander verschachtelt angeordnet sind, beispielsweise in Form von verschachtelten, vorzugsweise konzentrischen, Rechtecken. Eine verschachtelte Anordnung der Abschnitte hat den Vorteil, dass dieselben Schneidtestmarken sowohl bei einem Längsschnitt als auch bei einem Querschnitt verwendet werden können, insofern dieselben Schneidtestmarken auch bei einer Drehung der Schneidlage um 90° verwendet werden können.

In einer bevorzugten Ausführungsform ist vorgesehen, dass zum Ermitteln, ob Abweichungen der Ausrichtung der Schneidlage von einer Soll-Ausrichtung vorliegen, die ermittelte Farbgebung mit einer zu der Soll-Ausrichtung der Schneidlage korrespondierenden Soll-Farbgebung verglichen wird, wobei bei Abweichung der Farbgebung von der Soll-Farbgebung die Ausrichtung des Vorschubsattels zu der Schneidebene verändert wird. Die Soll-Farbgebung ist vorzugsweise einfarbig. Sie kann beispielsweise durch die Farbe der Schneidtestmarke des obersten Bogens festgelegt sein, an der das Schneidmesser die Schneidtestmarke schneidet. Vorzugsweise ist die Soll-Farbgebung in einem von der Schneidmaschine auszuführenden Schneidprogramm hinterlegt. Vorzugsweise ist in dem Schneidprogramm auch die Durchführung des Testschnitts, somit des Schnitts durch die Schneidtestmarken, und die Soll-Lage des Testschnitts hinterlegt.

Vorzugsweise wird bei Vorliegen einer Veränderung der Farbgebung des erfassten Musters in Stapelrichtung der Schneidlage eine notwendige Korrektur des Neigungswinkels des Vorschubsattels ermittelt.

In diesem Zusammenhang wird es als besonders vorteilhaft angesehen, wenn zum Ermitteln der notwendigen Korrektur des Neigungswinkels des Vorschubsattels in dem Muster eine erste Referenzposition und eine in Stapelrichtung beabstandete zweite Referenzposition ausgewählt wird, wobei ein Farbwert der Farbgebung an der ersten Referenzposition ermittelt wird und ein Farbwert der Farbgebung an der zweiten Referenzposition ermittelt wird, wobei ein Abstand der Referenzpositionen in der Stapelrichtung ermittelt wird, wobei aus einem Vergleich des Abstands der Referenzpositionen in der Stapelrichtung mit einem Abstand der Positionen der entsprechenden Farbwerte in der Schneidtestmarke in der Vorschubrichtung die notwendige Korrektur des Neigungswinkels des Vorschubsattels ermittelt wird. Die Ermittlung der notwendigen Korrektur erfolgt vorzugsweise computergestützt. Die notwendige Korrektur des Neigungswinkels wird vorzugsweise berechnet, beispielsweise über die Formel

$$\varphi = arctan \frac{X(C1) - X(C2)}{Z(C1) - Z(C2)}$$

wobei

$\varphi$ : notwendige Neigungswinkelkorrektur bzw. Winkelabweichung in der Neigung
Z(C1): Position mit Farbwert C1 in der Stapelrichtung Z
Z(C2): Position mit Farbwert C2 in der Stapelrichtung Z
X(C1): Position mit Farbwert C1 in der Vorschubrichtung X
X(C2): Position mit Farbwert C2 in der Vorschubrichtung X

In diesem Zusammenhang wird es wiederum als vorteilhaft angesehen, wenn die Schneidtestmarke zumindest vier Abschnitte aufweist.

Vorzugsweise liegt die erste Referenzposition im Bereich des oberen Endes der Schneidlage und die zweite Referenzposition im Bereich des unteren Endes der Schneidlage. Da die Höhe der Schneidlage in der Regel bekannt ist, kann die Höhe dann in guter Näherung als Abstand der Referenzpositionen verwendet werden, wodurch eine aufwändige Abstandsmessung entfallen kann. Der Abstand der Farbwerte in der Schneidtestmarke ist in der Regel bekannt, beispielsweise aus der Druckvorstufe.

Vorzugsweise erfolgt die Ermittlung der notwendigen Korrektur durch eine Berechnung. Bei einer Schneidtestmarke mit mehreren in hintereinander angeordnete einfarbige Abschnitten unterschiedlicher Farbe kann eine notwendige Korrektur des Neigungswinkels aus der Position der Farbübergänge in dem Muster über den geometrischen Zusammenhang der bekannten Abstände der entsprechenden Farbübergänge in der Schneidtestmarke bestimmt werden.

In einer bevorzugten Ausführungsform ist vorgesehen, dass ein Abstand von bestimmten Farben in dem Muster in der Stapelrichtung ermittelt und mit einem Abstand derselben Farben in der Schneidtestmarke in der Vorschubrichtung verglichen wird und aus dem Ergebnis des Vergleichs die notwendige Korrektur des Neigungswinkels des Vorschubsattels ermittelt wird.

Es wird als vorteilhaft angesehen, wenn der jeweilige Bogen mit einer ersten Schneidtestmarke und einer identischen zweiten Schneidtestmarke versehen ist, wobei die erste Schneidtestmarke und die zweite Schneidtestmarke in einer quer zu der Vorschubrichtung verlaufenden Querrichtung voneinander beabstandet sind, wobei die durchschnittenen ersten Schneidtestmarken ein erstes stirnseitig sichtbares Muster bilden und die durchschnittenen zweiten Schneidtestmarken ein zweites stirnseitig sichtbares Muster bilden, wobei die Farbgebung des ersten stirnseitigen Musters mit der Farbgebung des zweiten stirnseitigen Musters verglichen wird zum Ermitteln einer etwaigen Abweichung in der Drehstellung der Schneidlage bzw. des Druckbilds von der Soll-Ausrichtung zu der Schneidebene. Als besonders vorteilhaft wird es angesehen, wenn aus dem Ergebnis des Vergleichs die notwendige Korrektur des Drehwinkels des Vorschubsattels ermittelt wird.

In diesem Zusammenhang wird es als besonders vorteilhaft angesehen, wenn zum Ermitteln der notwendigen Korrektur des Drehwinkels des Vorschubsattels auf einer bestimmten Höhe in Stapelrichtung ein Farbwert der Farbgebung des ersten Musters ermittelt wird und auf derselben Höhe in der Stapelrichtung wie in dem ersten Muster ein Farbwert der Farbgebung des zweiten Muster ermittelt wird, wobei aus einem Vergleich des Abstands der ersten und der zweiten Schneidtestmarke in der Querrichtung mit einem Abstand der Positionen der entsprechenden Farbwerte in den Schneidtestmarken in Vorschubrichtung die notwendige Korrektur des Drehwinkels des Vorschubsattels ermittelt wird, vorzugsweise computergestützt ermittelt wird, insbesondere berechnet wird, beispielsweise über die Formel

$$\theta = arctan \frac{X(C1) - X(C2)}{D}$$

wobei

$\theta$: notwendige Drehwinkelkorrektur bzw. Winkelabweichung in der Drehung
X(C1): Position mit Farbwert C1 in der Vorschubrichtung X
X(C2): Position mit Farbwert C2 in der Vorschubrichtung X
D: Abstand zwischen der ersten Schneidtestmarke und der zweiten Schneidtestmarke in der Querrichtung Y

Der Abstand der ersten und der zweiten Schneidtestmarke in der Querrichtung ist in der Regel bekannt, beispielsweise aus der Druckvorstufe, sodass keine Abstandsmessung für diesen Abstand erfolgen muss. Entsprechendes gilt für den Abstand der Farbwerte in der Schneidtestmarke in Vorschubrichtung. Somit muss lediglich eine Farbwertmessung bzw. Farbwertermittlung in den Mustern erfolgen. Falls die Schneidtestmarken streifenförmige einfarbige Abschnitte aufweisen und diese Abschnitte einen Versatz in der Querrichtung aufweisen, muss dieser Versatz zusätzlich berücksichtigt werden. Beispielsweise muss dann bei der Berechnung nach obiger Formel nicht der Abstand zwischen der ersten Schneidtestmarke und der zweiten Schneidtestmarke in der Querrichtung verwendet werden, sondern der Abstand zwischen dem entsprechenden farbigen Abschnitt der ersten Schneidtestmarke von dem entsprechenden farbigen Abschnitt der zweiten Schneidtestmarke in der Querrichtung verwendet werden.

In einer bevorzugten Ausführungsform weist der jeweilige Bogen in Vorschubrichtung mehrere Schneidtestmarken auf, die in der Vorschubrichtung voneinander beabstandet sind. Dadurch wird es beispielsweise ermöglicht, weitere Testschnitte durchzuführen, um zu prüfen, ob sich die Ausrichtung der Schneidlage nach dem Durchführen von Nutzenschnitten oder Zwischenschnitten verändert hat oder aus anderen Umstände die Lage des Druckbildes oder der Bögen sich zu der Schneidebene verändert hat, und etwaige Korrekturen vorzunehmen.

Grundsätzlich ist es denkbar, dass die Ermittlung der notwendigen Korrekturen, beispielsweise der Drehwinkel- und/oder Neigungswinkelkorrektur, über eine Wertetabelle erfolgt, in der Farbgebungen mit den korrespondierenden notwendigen Korrekturen korreliert sind. Eine solche Wertetabelle kann beispielsweise im Vorfeld durch Probeschnitte bei bekannten Ausrichtungsfehlern erstellt werden. Bei der Durchführung des Verfahrens kann dann das sich ergebende Muster bzw. die Farbgebung des Musters dann mit den in der Wertetabelle hinterlegten Vergleichsmustern mit bekannten Ausrichtungsfehlern verglichen werden, um die notwendigen Korrekturen zu ermitteln.

Es wird als vorteilhaft angesehen, wenn das oder die stirnseitig sichtbaren Muster, insbesondere das erste und das zweite stirnseitig sichtbare Muster, mittels zumindest eines Bildsensors, beispielsweise dem Bildsensor einer Kamera, erfasst werden und an eine Auswerteeinrichtung übermittelt werden, wobei die Auswerteeinrichtung dazu eingerichtet ist, die Farbgebung des oder der Muster computergestützt zu ermitteln und/oder die notwendige Korrektur des Drehwinkels computergestützt zu ermitteln und/oder die notwendige Korrektur des Neigungswinkels des Vorschubsattels computergestützt zu ermitteln.

Dabei ist es durchaus denkbar, dass ein Verwender mit der Auswerteeinrichtung interagiert, beispielsweise über eine grafische Benutzeroberfläche. Dabei ist es denkbar, dass der Verwender die Position von Farbübergängen bzw. -grenzen in dem Muster beurteilt und festlegt. Es ist aber auch durchaus denkbar, dass die Ermittlung, ob Abweichungen der Ausrichtung der Schneidlage von einer Soll-Ausrichtung vorliegen basierend auf einer Auswertung der Farbgebung des stirnseitig sichtbaren Musters vollautomatisch erfolgt.

Vorzugsweise ist der Bildsensor in der Stapelrichtung und/oder in der Querrichtung, somit entlang der Stirnseite, verfahrbar, um das oder die Muster zu erfassen.

Vorzugsweise ist die Auswerteeinrichtung dazu eingerichtet, die erfasste Farbgebung mit der zu der Soll-Ausrichtung korrespondierenden Soll-Farbgebung zu vergleichen und aus dem Ergebnis des Vergleichs die notwendige Korrektur des Drehwinkels und/oder die notwendige Korrektur des Neigungswinkels des Vorschubsattels zu ermitteln.

In einer bevorzugten Ausführungsform ist vorgesehen, dass die Schneidmaschine eine Verstelleinrichtung, beispielsweise einen Stellmotor, zum Verstellen des Drehwinkels und/oder Neigungswinkels des Vorschubsattels aufweist, wobei die Auswerteeinrichtung dazu eingerichtet ist, die Verstelleinrichtung zu veranlassen, die notwendige Korrektur der des Drehwinkels und/oder Neigungswinkels des Vorschubsattels vorzunehmen.

Die erfindungsgemäße Schneidmaschine dient zum Schneiden einer Schneidlage aus gestapelten, blattförmigen Gut in Form von Bögen, wobei der jeweilige Bogen mit zumindest einer Schneidtestmarke versehen ist. Bei der Schneidmaschine handelt es sich insbesondere um einen Planschneider. Die Schneidmaschine weist einen Tisch zur Aufnahme der Schneidlage, ein Schneidmesser und einen Vorschubsattel zum Verschieben der Schneidlage in Richtung einer Schneidebene des Schneidmessers der Schneidmaschine auf. Die jeweilige Schneidtestmarke weist eine sich in der Vorschubrichtung des Vorschubsattels verändernde Farbgebung auf, wobei die Schneidmaschine eine Verstelleinrichtung zum Verstellen einer Ausrichtung des Vorschubsattels zu der Schneidebene aufweist, zur Veränderung einer Ausrichtung der an dem Vorschubsattel anliegenden Schneidlage zu der Schneidebene. Die Schneidmaschine weist ein System zum Ermitteln und Korrigieren etwaiger Abweichungen der Ausrichtung der Schneidlage von einer Soll-Ausrichtung der Schneidlage auf, wobei das System zumindest einen Bildsensor aufweist, wobei der Bildsensor dazu eingerichtet ist, nach einem Schnitt durch die Schneidtestmarken ein durch die beschnittenen Schneidtestmarken gebildetes stirnseitig sichtbares farbiges Muster zu erfassen, wobei das System eine Auswerteeinrichtung aufweist, wobei die Auswerteeinrichtung dazu eingerichtet ist, anhand einer Farbgebung des erfassten Musters zu ermitteln, ob Abweichungen der Ausrichtung der Schneidlage von der Soll-Ausrichtung vorliegen, und wobei das System dazu eingerichtet ist, bei Vorliegen von Abweichungen durch Ansteuern der Verstelleinrichtung den Vorschubsattel in seiner Ausrichtung zu der Schneidebene zu verstellen zum Korrigieren der Ausrichtung der an dem Vorschubsattel anliegenden Schneidlage zu der Schneidebene.

Als besonders vorteilhaft wird es angesehen, wenn es sich bei dem Schneidmesser um ein Langmesser handelt. Vorzugsweise handelt es sich bei der Schneidmaschine um einen Querschneider, insbesondere einen Planschneider, besonders bevorzugt um einen Schnellschneider.

Die Schneidmaschine dient insbesondere zur Durchführung des erfindungsgemäßen Verfahrens. Vorzugsweise ist die Schneidmaschine dazu eingerichtet, dass erfindungsgemäße Verfahren, insbesondere vollautomatisch, durchzuführen.

In einer bevorzugten Ausführungsform ist vorgesehen, dass der Vorschubsattel um eine senkrecht zu einer von dem Tisch aufgespannten Ebene verlaufenden ersten Achse drehbar ist zur Veränderung eines Drehwinkels des Vorschubsattels bezüglich der Schneidebene und/oder wobei der Vorschubsattel um eine parallel zu der von dem Tisch aufgespannten Ebene verlaufenden zweiten Achse drehbar ist zur Veränderung eines Neigungswinkels des Vorschubsattels bezüglich der Schneidebene.

Es wird als vorteilhaft angesehen, wenn die Auswerteeinrichtung dazu eingerichtet ist, das von dem Bildsensor erfasste farbige Muster computergestützt auszuwerten, um die notwendige Korrektur des Neigungswinkels und/oder die notwendige Korrektur des Drehwinkels computergestützt zu ermitteln.

In einer Weiterbildung ist vorgesehen, dass die Auswerteeinrichtung dazu eingerichtet ist, die ermittelte Farbgebung mit einer in einem Speicher der Auswerteeinrichtung hinterlegten zu der Soll-Ausrichtung der Schneidlage korrespondierenden Soll-Farbgebung zu vergleichen, wobei das System dazu eingerichtet ist, basierend auf dem Ergebnis des Vergleichs die Verstelleinrichtung anzusteuern zum Korrigieren der Ausrichtung der an dem Vorschubsattel anliegenden Schneidlage zu der Schneidebene.

Es ist auch durchaus denkbar, dass die Auswerteeinrichtung und/oder der Bildsensor Bestandteile eines Kamerasystems bilden.

Es ist durchaus denkbar, dass die Auswerteeinrichtung ein separates Bauteil bildet. Dadurch kann die Auswerteeinrichtung weitestgehend unabhängig von der Schneidmaschine angeordnet werden bzw. an unterschiedlichen Stellen der Schneidmaschine angeordnet werden. Es ist durchaus denkbar, dass die Auswerteeinrichtung räumlich getrennt von der Schneidmaschine angeordnet ist.

Vorzugsweise weist das System mehrere Bildsensoren auf, wobei die Bildsensoren dazu eingerichtet sind, unterschiedliche Bereiche der beschnittenen Stirnseite optisch zu erfassen, insbesondere in einer Querrichtung beabstandete Bereiche optisch zu erfassen.

Es ist aber auch durchaus denkbar, dass das System lediglich einen Bildsensor zur optischen Erfassung der Stirnseite aufweist, wobei dieser Bildsensor in Querrichtung und/oder in Hochrichtung verfahrbar ist, um unterschiedliche Bereiche der Stirnseite optisch zu erfassen. Dies ist insbesondere dann von Vorteil, wenn auf dem jeweiligen Bogen in Querrichtung beabstandete Schneidtestmarken ausgebildet sind. Durch die Verfahrbarkeit des zumindest einen Bildsensors können somit, unabhängig von der Anordnung der Schneidtestmarken auf den Bögen bzw. den Blättern, die durch diese Schneidtestmarken gebildeten stirnseitigen Muster erfasst werden.

Es wird als besonders vorteilhaft angesehen, wenn der zumindest eine Bildsensor auf der Seite des Tisches angeordnet ist, der der Aufnahme des geschnittenen Guts dient. Ein solcher Bereich des Tisches wird häufig auch als Vordertisch bezeichnet. Der auf der anderen Seite der Schneidebene angeordnete Tischbereich wird typischerweise als Hintertisch bezeichnet.

Vorzugsweise ist der zumindest eine Bildsensor oberhalb des zu schneidenden Guts bzw. oberhalb des Tisches angeordnet.

Es wird bevorzugt, wenn der zumindest eine Bildsensor mit der Schneidmaschine mechanisch verbunden ist, vorzugsweise mit einem Portalrahmen der Schneidmaschine mechanisch verbunden ist. Als besonders vorteilhaft wird es in diesem Zusammenhang angesehen, wenn der Portalrahmen der Lagerung des Schneidmessers dient.

Die im Zusammenhang mit dem Verfahren genannten Vorteile und vorteilhaften Weiterbildungen gelten entsprechend für die Schneidmaschine und umgekehrt.

In den nachfolgenden Figuren wird die Erfindung anhand von Ausführungsbeispielen näher erläutert, ohne auf diese beschränkt zu sein. Es zeigen:

Fig. 1     eine schematische Darstellung einer erfindungsgemäßen Schneidmaschine in einer Schnittansicht gemäß der Linie I-I in Fig. 2,

Fig. 2     die erfindungsgemäße Schneidmaschine in einer Ansicht gemäß dem Pfeil II in Fig. 1,

Fig. 3     einen Teilbereich der Schneidmaschine gemäß Fig. 1 in einer Ansicht von oben,

Fig. 4     einen Teilbereich der Schneidmaschine gemäß Fig. 1 in einer perspektivischen Ansicht schräg von der Seite,

Fig. 5     eine schematische Darstellung eines zu schneidenden Bogens einer Schneidlage in einer Ansicht von oben, wobei die Bögen jeweils mit einer Schneidtestmarke gemäß einer ersten Ausführungsform bedruckt sind,

Fig. 6     zwei Bereiche einer beschnittenen Stirnseite des zu schneidenden Guts bei Soll-Ausrichtung der Schneidlage,

Fig. 7      eine Ansicht wie in Fig. 6 bei fehlerhafter Ausrichtung der Schneidlage hinsichtlich der Drehstellung,

Fig. 8      eine Ansicht wie in Fig. 6 bei einer fehlerhaften Ausrichtung der Schneidlage hinsichtlich der Neigungsstellung,

Fig. 9      eine Ansicht wie in Fig. 6 bei einer fehlerhaften Ausrichtung der Schneidlage hinsichtlich der Drehstellung und hinsichtlich der Neigungsstellung,

Fig. 10     eine schematische Darstellung der Schneidlage bei einem Ausrichtungsfehler gemäß Fig. 7 in einer Ansicht von oben,

Fig. 11     eine schematische Darstellung der Schneidlage bei einem Ausrichtungsfehler gemäß Fig. 8 in einer Seitenansicht,

Fig. 12     eine schematische Darstellung eines zu schneidenden Bogens einer Schneidlage in einer Ansicht von oben, wobei die Bögen jeweils mit einer Schneidtestmarke gemäß einer zweiten Ausführungsform bedruckt sind.

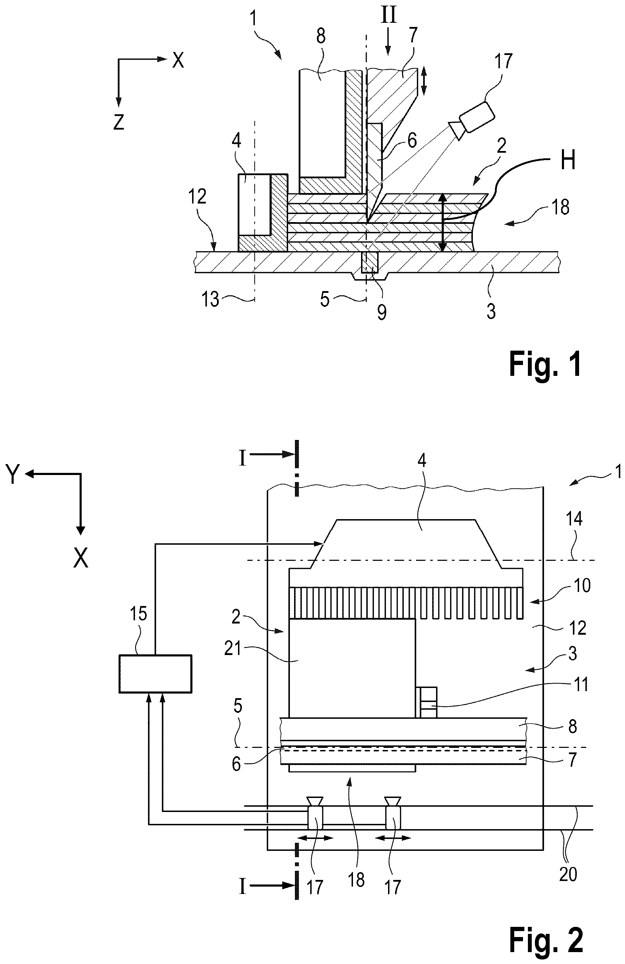

Die Fig. 1 zeigt eine erfindungsgemäße Schneidmaschine 1, die zum Schneiden einer Schneidlage 2 von gestapeltem, blattförmigem Gut in Form von Bögen dient. Bei dem Bögen kann es sich um Bögen aus Papier, Pappe, Folie oder dergleichen handeln. Die Schneidlage 2 liegt vorliegend in Quaderform vor und weist eine Stapelhöhe H auf.

Die Schneidmaschine 1 weist einen Tisch 3 mit einer oberen, horizontalen Tischfläche 12 auf. In der Fig. 2 erstreckt sich die Tischfläche 12 senkrecht zur Ebene des Zeichnungsblatts, somit in der bzw. parallel zu der X-Y-Ebene. In einem nicht näher dargestellten Portalrahmen ist ein absenk- und abhebbares Schneidmesser 6 gelagert, wobei vor dem Schneidmesser 6 ein Pressbalken 8, gleichfalls im Portalrahmen, heb- und senkbar gelagert ist. Der Pressbalken 8 dient dem Fixieren der Schneidlage 2, indem der Pressbalken 8 in abgesenkter Stellung, wie sie in der Fig. 1 dargestellt ist, die Schneidlage 2 gegen den Tisch 3 drückt. Das Schneidmesser 6 ist im Schwingschnitt mittels eines nicht näher dargestellten Kurbelbetriebs aus einer oberen Endstellung in eine untere Endstellung verfahrbar, in der es in einer vom Tisch 3 aufgenommene Schneidleiste 9 eindringt. Die Fig. 1 zeigt das Schneidmesser 6 in einem Zustand zwischen der ersten Endstellung und der zweiten Endstellung. Das Schneidmesser 6 ist vorliegend in einem sogenannten Messerbalken 7 der Schneidmaschine 1 gelagert, wobei dieser Messerbalken 7 von der ersten Endstellung in die zweite Endstellung verfahrbar ist und der Übertragung der Schneidbewegung auf das Schneidmesser 6 dient.

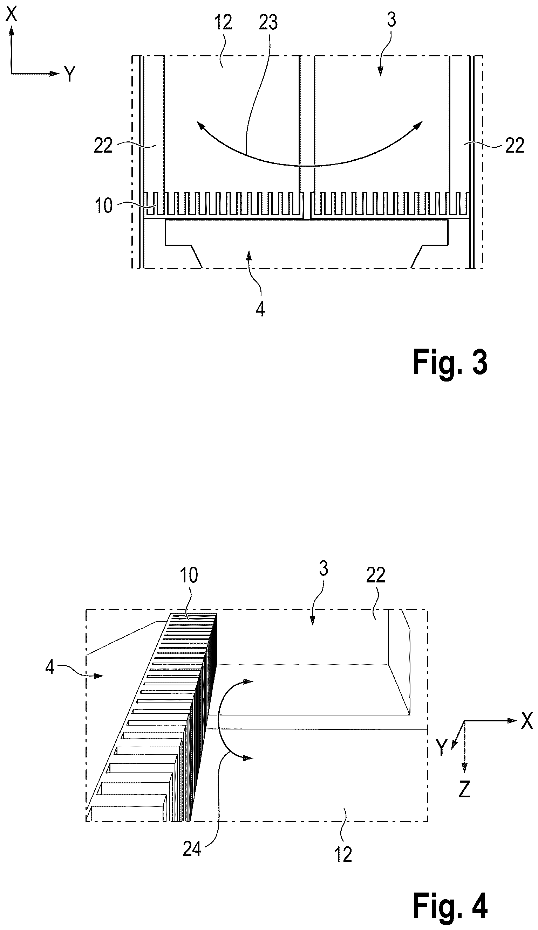

Im Bereich des hinteren Tischteils, somit in der Fig. 1 links, ist ein Vorschubsattel 4 vorgesehen, der einen vorderen Rechenabschnitt 10 aufweist. Dieser Rechenabschnitt 10 liegt an dem dem Schneidmesser 6 abgewandten Ende an der Schneidlage 2 an. Der Vorschubsattel 4 dient dem Verschieben der Schneidlage 2 in Richtung einer Schneidebene 5 des Schneidmessers 6. Die Schneidebene 5 liegt vorliegend in der bzw. parallel zu der Y-Z-Ebene. Der Vorschubsattel 4 ist um eine vertikale Achse 13 drehbar zur Veränderung einer Ausrichtung der Schneidlage 2, nämlich einer Drehstellung der Schneidlage 2, zu der Schneidebene 5 des Schneidmessers 6, wie dies schematisch durch den Pfeil 23 in der Fig. 3 kenntlich gemacht ist. Ferner ist der Vorschubsattel 4 um eine horizontale Achse 14 drehbar zur Veränderung einer Ausrichtung der Schneidlage 2, nämlich einer Neigung der Schneidlage 2, zu der Schneidebene 5 des Schneidmessers 6, wie dies schematisch durch den Pfeil 24 in der Fig. 4 kenntlich gemacht ist. Die Schneidmaschine 1 weist eine nicht näher dargestellte Verstelleinrichtung zum Drehen und Neigen des Vorschubsattels 4 auf.

Die Schneidmaschine 1, genauer gesagt der Tisch 3, weist zwei gegenüberliegende Seitenanschläge 22 auf, die der Anlage der Schneidlage 2 dienen. Mittels eines Richtlineals 11 kann das Schneidgut 2 händisch gerichtet, insbesondere an einen der Seitenanschläge 22 herangedrückt werden.

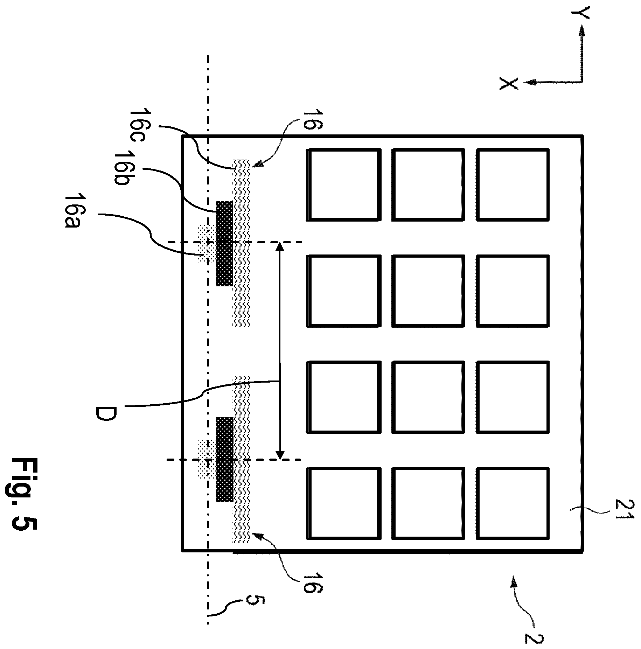

Eine Oberseite 21 eines Bogens der Schneidlage 2 ist in der Fig. 5 dargestellt. Die Bögen sind mit einem Druckbild, vorliegend in Form von Quadraten, bedruckt, die durch entsprechendes Beschneiden freigestellt werden sollen. Um das gewünschte Schnittbild zu erhalten, muss dafür Sorge getragen werden, dass die Ausrichtung der Schneidlage 2 zu der Schneidebene 5 einer Soll-Ausrichtung entspricht. Zu diesem Zweck sind auf den jeweiligen Bogen der Schneidlage 2 zusätzlich zu dem eigentlichen Druckbild zwei Schneidtestmarken 16 gemäß einer ersten Ausführungsform aufgedruckt, wie dies schematisch in der Fig. 5 dargestellt ist. Diese Schneidtestmarken 16 wurden zusammen mit dem Druckbild aufgedruckt. Die Ausdehnung der Schneidtestmarken 16 beträgt typischerweise lediglich Bruchteile von Millimetern in der Längsrichtung X und einige Millimeter in der Querrichtung Y. Der unbeschnittene Bogen hingegen weist typischerweise eine Ausdehnung von mehr als 100 cm in der Längsrichtung X und von mehr als 100 cm in der Querrichtung Y auf. Aus Gründen des besseren Verständnisses sind die Schneidtestmarken 16 in der Fig. 5 nicht maßstabsgetreu sondern stark vergrößert dargestellt. Die zwei Schneidtestmarken 16 weisen in der Querrichtung Y einen Abstand D auf. Die jeweilige Schneidtestmarke 16 weist mehrere in der Vorschubrichtung X des Vorschubsattels 4 hintereinander angeordnete, aneinander angrenzende einfarbige Abschnitte 16a, 16b, 16c auf, wobei benachbarte Abschnitte 16a, 16b, 16c sich in ihrer Farbe unterscheiden. Vorliegend ist der erste Abschnitt 16a schwarz, der zweite Abschnitt 16b ist gelb und der dritte Abschnitt 16c ist rot. Dadurch ergibt sich jeweils eine Schneidtestmarke 16 mit einer sich in der Vorschubrichtung X des Vorschubsattels 4 verändernden Farbgebung, nämlich von schwarz nach gelb nach rot. Der jeweilige Abschnitt 16a, 16b, 16c ist rechteckförmig. Die Längserstreckung Ader Abschnitte 16a, 16b, 16c in der Vorschubrichtung X sind identisch und betragen Bruchteile von Millimetern, vorliegend jeweils 0,1 mm. Dementsprechend weisen Mittellinien benachbarter Abschnitte 16a, 16b, 16c einen Abstand auf, der identisch ist mit der Erstreckung der Abschnitte. Quer zu der Vorschubrichtung X, nämlich in der Querrichtung Y, unterscheiden sich die Abschnitte 16a, 16b, 16c in ihrer Erstreckung, somit in ihrer Quererstreckung. Vorliegend weist der erste Abschnitt 16a eine Quererstreckung von etwa 1 cm auf. Die Quererstreckung des zweiten Abschnitts 16b ist etwa doppelt so groß wie die Quererstreckung des ersten Abschnitts 16a und die Quererstreckung des dritten Abschnitts 16c ist etwa doppelt so groß wie die Quererstreckung des zweiten Abschnitts 16b. Somit weist die jeweilige Schneidtestmarke 16 zusätzlich zu einer sich in Vorschubrichtung X des Vorschubsattels 4 verändernden Farbgebung auch einen sich in Vorschubrichtung X verändernden Querschnitt auf, wobei sich der Querschnitt vorliegend stufenförmig verändert. Durch einen mit der Schneidmaschine 1 ausgeführten Testschnitt durch die Schneidtestmarken 16 können etwaige Abweichungen der Ausrichtung der Schneidlage 2 von der Soll-Ausrichtung der Schneidlage 2 ermittelt werden, wie nachfolgend näher erläutert wird.

Die Schneidmaschine 1 weist ein System zum Ermitteln und Korrigieren etwaiger Abweichungen der Ausrichtung der Schneidlage 2 zu der Schneidebene 5 von der Soll-Ausrichtung der Schneidlage 2 zu der Schneidebene 5 auf. Das System weist zwei Kameras auf, wobei die jeweilige Kamera einen Bildsensor 17 zum optischen Erfassen einer beschnittenen Stirnseite 18 der Schneidlage 2 nach Durchführung eines Testschnitts aufweist. Die beiden Kameras sind in der Querrichtung Y verschiebbar und mittels einer Lagerstruktur 20 mit der Schneidmaschine 1, vorliegend dem Portalrahmen, verbunden.

Um etwaige Abweichungen in der Ausrichtung der Schneidlage 2 zu der Schneidebene 5 zu ermitteln, wird die Schneidlage 2 mittels des Vorschubsattels 4 derart in Richtung der Schneidebene 5 des Schneidmessers 6 verschoben, dass die Schneidebene 5 die Schneidtestmarken 16 schneidet. In der Fig. 5 ist dieser Zustand schematisch dargestellt. Bei einem Schnitt mit dem Schneidmesser 6 wird die Schneidlage 2 im Bereich der Schneidtestmarken 16 durchschnitten, wodurch sich eine beschnittene Stirnseite 18 der Schneidlage 2 mit zwei durch die beschnittenen Schneidtestmarken 16 gebildeten, stirnseitig sichtbaren farbigen Mustern 19 ausbildet, die in der Querrichtung Y in um den Abstand D beabstandet sind, Etwaige durch Ausrichtungsfehler bedingte Abweichungen im Abstand D sind in der Regel vernachlässigbar.

Der Bildsensor 17 ist dazu eingerichtet, nach einem Schnitt durch die Schneidtestmarken 16, auch als Testschnitt bezeichnet, die durch die beschnittenen Schneidtestmarken 16 gebildeten stirnseitig sichtbaren farbigen Muster 19 zu erfassen, wobei das System eine Auswerteeinrichtung 15 aufweist, wobei die Auswerteeinrichtung 15 dazu eingerichtet ist, anhand einer Farbgebung der erfassten Muster 19 zu ermitteln, ob Abweichungen der Ausrichtung der Schneidlage 2 von der Soll-Ausrichtung vorliegen, und wobei die Auswerteeinrichtung 15 dazu eingerichtet ist, bei Vorliegen von Abweichungen durch Ansteuern der Verstelleinrichtung den Vorschubsattel 4 in seiner Ausrichtung zu der Schneidebene 2 zu verstellen, nämlich um die Achse 13 und/oder um die Achse 14 zu drehen, um die Ausrichtung der an dem Vorschubsattel 4 anliegenden Schneidlage 2 zu der Schneidebene 5 in geeigneter Weise zu korrigieren.

Die Farbgebung des jeweiligen Musters 19 ist davon abhängig, an welcher Position in Vorschubrichtung X die Schneidtestmarken 16 durchschnitten wurden. Wird die Schneidtestmarke 16 im Bereich des ersten schwarzen Abschnitts 16a durchschnitten, ergibt sich in dem Muster ein zu dem ersten Abschnitt 16a korrespondierender schwarzer Bereich 19a in dem Muster 19. Entsprechend ergibt sich bei einem Schnitt durch den zweiten gelben Abschnitt 16b ein gelber Bereich 19b und bei einem Schnitt durch den dritten Abschnitt 16c ein roter Bereich 19c in dem Muster 19. Bei exakter Ausrichtung der Schneidlage 2 zu der Schneidebene 5 liegen die Schneidtestmarken 16 in Richtung der Schneidebene 5 fluchtend übereinander. Dies entspricht der Soll-Ausrichtung der Schneidlage 2 zu der Schneidebene 5. Wird bei der Soll-Ausrichtung ein Schnitt durch die Schneidlage 2 durchgeführt, ergibt sich ein einfarbiges Muster 19, da sämtliche Schneidtestmarken 16 in der Vorschubrichtung X an derselben Position durchschnitten werden. Wird der schwarze Abschnitt 16a in die Schneidebene 5 gebracht, wie dies in der Fig. 5 gezeigt ist, ergibt sich bei Soll-Ausrichtung der Schneidlage 2 dementsprechend ein Muster 19, das nur aus einem schwarzen Bereich 19a besteht. Somit ist eine zu der Soll-Ausrichtung korrespondierende Soll-Farbgebung vorliegend einfarbig schwarz.

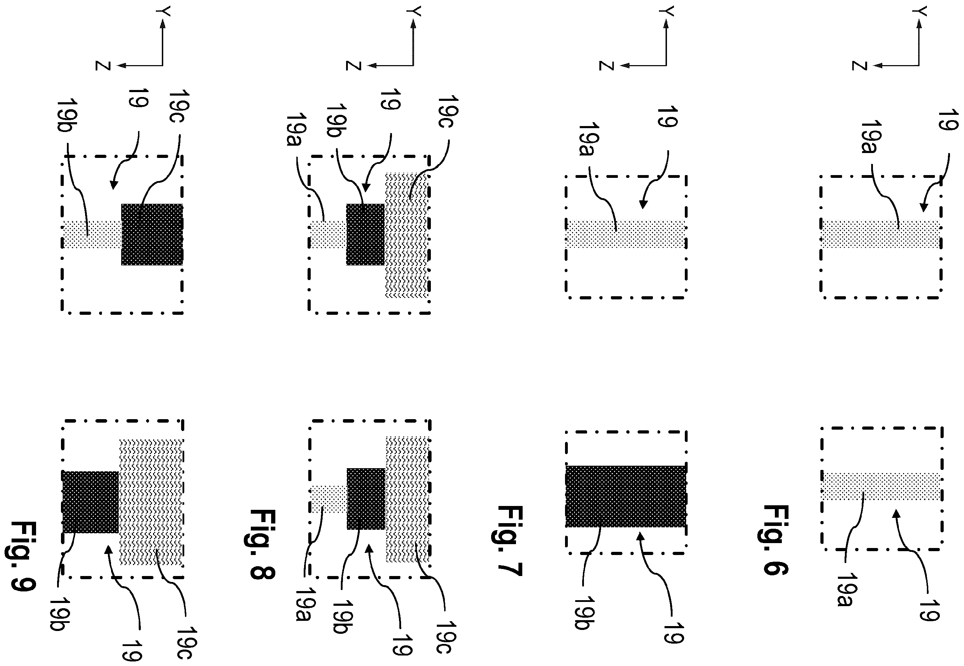

Exemplarische Schnittmuster 19 für eine Schneidlage 2, die aus einer Vielzahl von übereinander gestapelten Bögen besteht, sind schematisch in den Fig. 6 bis 9 für unterschiedliche Ausrichtungen der Schneidlage 2 zu der Schneidebene 5 gezeigt. Aus Gründen der Übersicht sind die einzelnen Bögen, in der Regel mehrere hundert bis mehrere tausend übereinander gestapelte Bögen, in den Fig. 6 bis 9 nicht aufgelöst dargestellt. Der jeweilige Bogen entspricht dem in der Fig. 5 dargestellten Bogen und weist dementsprechend zwei in Querrichtung Y beabstandete Schneidtestmarken 16 auf. Die Fig. 6 bis 9 zeigen jeweils zwei in Querrichtung Y beabstandete Bereiche der Stirnseite 18 der beschnittenen Schneidlage 2, die jeweils eines der durch die durchschnittenen Schneidtestmarken 16 gebildeten Muster 19 zeigen.

Die Fig. 6 zeigt das Ergebnis eines Schnitts durch eine Schneidlage 2 bei der die Ausrichtung Schneidlage 2 zu der Schneidebene 5 der Soll-Ausrichtung der Schneidlage 2 zu der Schneidebene 5 entspricht. Die Ausrichtung der Schneidebene 5 zu den Schneidtestmarken 16 in Vorschubrichtung X war bei dem Testschnitt derart gewählt, dass das Schneidmesser 6 die Schneidtestmarke 16 des obersten Bogens etwa in der Mitte des ersten Abschnitts 16a durchschnitten hat, wie dies schematisch in der Fig. 5 dargestellt ist. Nach dem Schnitt bilden in diesem Fall, somit einem Fall ohne Abweichungen der Ausrichtung von einer Soll-Ausrichtung, die beiden durchschnittenen Schneidtestmarken 16 identische stirnseitig sichtbare farbige Muster 19 aus, wobei das jeweilige Muster 19 keinerlei Farbveränderung oder Querschnittsveränderungen in Hochrichtung Z, die vorliegend identisch ist mit der Stapelrichtung der Schneidlage 2, aufweist. Da der Schnitt durch den ersten Abschnitt 16a erfolgt ist, ist die Farbgebung des jeweiligen Musters 19 identisch mit der Farbe des ersten Abschnitts 16a. Somit weist das jeweilige Muster 19 nur einen schwarzen Bereich 19a auf. Die Farbgebung des Muster 19 entspricht somit der Soll-Farbgebung.

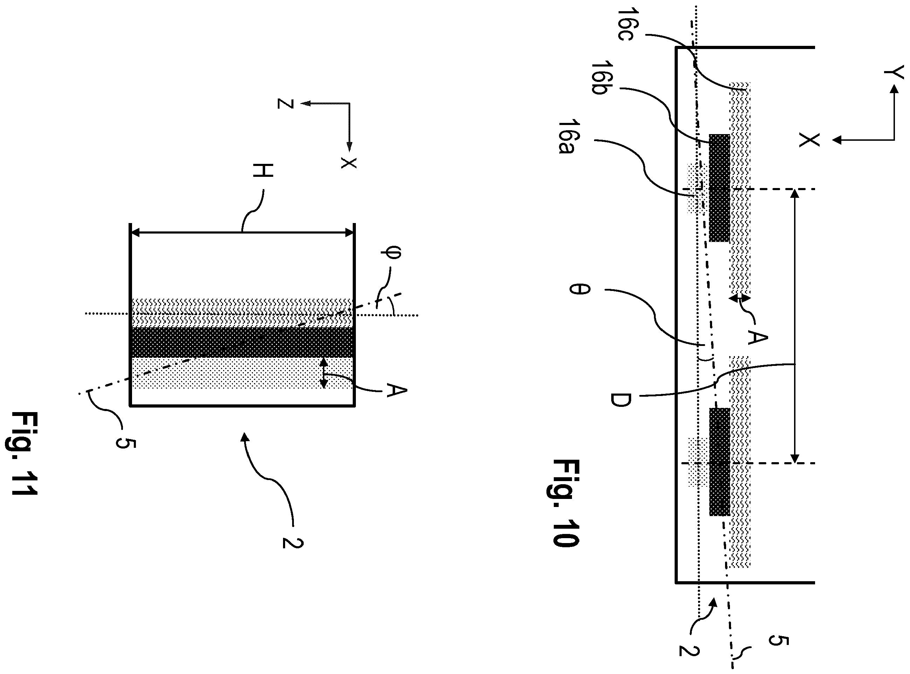

Die Fig. 7 bis 9 zeigen Schnittmuster 19 bei Abweichungen von der Soll-Ausrichtung der Schneidlage 2 bezüglich der Schneidebene 5. Die Fig. 7 zeigt eine fehlerhafte Ausrichtung, wobei diese fehlerhafte Ausrichtung darin besteht, dass die Schneidlage 2 zu der Schneidebene 5 hinsichtlich der Achse 13 um einen Drehwinkel $\theta$ verdreht ist, wie dies schematisch in der Fig. 10 dargestellt ist. Die in der Fig. 7 gezeigten, durch die identischen Schneidtestmarken 16 gebildeten Schnittmuster 19 sind unterschiedlich in ihrer Farbgebung. Das linke Muster 19 weist ausschließlich einen schwarzen Bereich 19a und das rechte Muster 19 weist ausschließlich einen gelben Bereich 19b auf. Dieser Unterschied ergibt sich dadurch, dass aufgrund der fehlerhaften Ausrichtung das Schneidmesser 6 die das jeweilige Muster 19 bildende Schneidtestmarke 16 nicht in identischen Abschnitten durchschnitten hat, sondern die das linke Muster 19 bildende Schneidtestmarke 16 in dem ersten schwarzen Abschnitt 16a und die das rechte Muster 19 bildende Schneidtestmarke 16 in dem zweiten gelben Abschnitt 16b durchschnitten wurde, wie auch der Fig. 10 zu entnehmen ist. Zudem unterscheiden sich die beiden Muster 19 in ihrer Ausdehnung in Querrichtung Y. Dieser Unterschied liegt darin begründet, dass der erste Abschnitt 16a eine geringere Erstreckung in Querrichtung Y aufweist als der zweite Abschnitt 16b. Die Korrektur der Ausrichtung der Schneidlage 2 kann durch Drehen des Vorschubsattels 4 um die Achse 13 erfolgen. Da die beiden Muster 19 einfarbig sind, liegt kein Neigungsfehler vor. Der Drehwinkel $\theta$ und somit die notwendige Drehwinkelkorrektur kann über den folgenden Zusammenhang berechnet werden:

$$\theta = arctan\frac{X(schwarz) - X(gelb)}{D} = \frac{A}{D}$$

wobei

$\theta$: notwendige Drehwinkelkorrektur bzw. Winkelabweichung in der Drehung X(schwarz): Position der Farbe Schwarz in der Vorschubrichtung X
X(gelb): Position der Farbe Gelb in der Vorschubrichtung X
D: Abstand zwischen der ersten Schneidtestmarke und der zweiten Schneidtestmarke in der Querrichtung Y
A: Längserstreckung der Abschnitte

Die Fig. 8 zeigt eine andere fehlerhafte Ausrichtung, wobei diese fehlerhafte Ausrichtung darin besteht, dass das zu schneidende Gut 2 zu der Schneidebene 5 hinsichtlich der Achse 14 um den Neigungswinkel $\varphi$ verdreht ist, insofern in seiner Neigung bezüglich der Schneidebene 5 nicht korrekt ist, wie dies schematisch in der Fig. 11 dargestellt ist. Vorliegend weist das jeweilige Muster 19 einen sich in Hochrichtung Z stufenförmig verändernden Querschnitt mit drei Stufen unterschiedlicher Farbe auf, wobei der Querschnitt der Stufen von unten nach oben zunimmt und die unterste Stufe schwarz, die mittlere Stufe gelb und die oberste Stufe rot ist. Aus der Farbgebung der Muster 19 lässt sich schließen, dass die beschnittene Schneidlage einen Neigungsfehler in Form eines Unterschnitts aufweist. Eine Korrektur der Ausrichtung kann durch Drehen des Vorschubsattels 4 um die Achse 14 um den Winkel $\varphi$ erfolgen. Da die beiden Muster 19 identisch sind, liegt kein Fehler in der Drehstellung der Schneidlage 2 vor. Der Neigungswinkel $\varphi$ und somit die Neigungswinkelkorrektur kann in guter Näherung über den folgenden Zusammenhang berechnet werden:

$$\varphi = arctan\frac{X(schwarz - gelb) - X(gelb - rot)}{Z(schwarz - gelb) - Z(gelb - rot)}$$

$$= arctan\frac{A}{Z(schwarz - gelb) - Z(gelb - rot)}$$

wobei

φ: notwendige Neigungswinkelkorrektur bzw. Winkelabweichung in der Neigung Z(schwarz-gelb): Position der Grenze zwischen der Farbe Schwarz und der Farbe Gelb in der Stapelrichtung Z
Z(gelb-rot): Position der Grenze zwischen der Farbe Gelb und der Farbe Rot in der Stapelrichtung Z
A: Längserstreckung der Abschnitte

In guter Näherung kann man annehmen, dass

$$\varphi \approx arctan\frac{(N-1) \times A}{H} = \frac{2 \times A}{H}$$

wobei

φ : notwendige Neigungswinkelkorrektur bzw. Winkelabweichung in der Neigung
N: Anzahl der Bereiche unterschiedlicher Farbe in dem Muster in der Stapelrichtung; vorliegend N=3
A: Abstand der Mitten benachbarter Abschnitte in der Schneidtestmarke in der Vorschubrichtung
H: Stapelhöhe der Schneidlage

Die Fig. 9 zeigt die stirnseitigen Muster 19 bei Vorliegen einer Kombination eines Neigungs- und eines Drehfehlers.

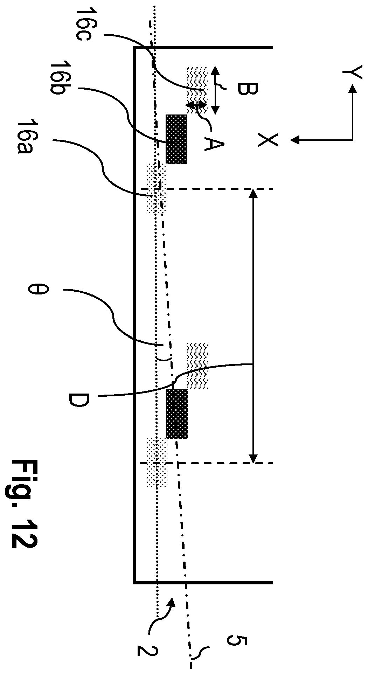

Die Fig. 12 zeigt wiederum einen schematische Darstellung eines zu schneidenden Bogens einer Schneidlage 2 in einer Ansicht von oben analog zu der Fig. 10 gemäß einer zweiten Ausführungsform 2. Die Bögen sind wiederum jeweils zwei Schneidtestmarken 16 aufgedruckt, wobei sich die Schneidtestmarken von den Schneidtestmarken der ersten in der Fig. 5 dargestellten Ausführungsform im Wesentlichen dadurch unterscheiden, dass die einfarbigen Abschnitte 16a, 16b, 16c identische Breitenerstreckung B in der Querrichtung Y aufweisen und um die Breitenerstreckung B in der Querrichtung Y zueinander versetzt sind, sodass sich eine treppenförmige Anordnung ergibt.

Bezugszeichenliste

| | |
|---|---|
| 1 | Schneidmaschine |
| 2 | Schneidgut |
| 3 | Tisch |
| 4 | Vorschubsattel |
| 5 | Schneidebene |
| 6 | Schneidmesser |
| 7 | Messerbalken/Messerhalter |
| 8 | Pressbalken |
| 9 | Schneidleiste |
| 10 | Rechenabschnitt |
| 11 | Richtlineal |
| 12 | Tischfläche |
| 13 | Achse |
| 14 | Achse |
| 15 | Auswerteeinrichtung |
| 16 | Schneidtestmarke |
| 16a | erster Abschnitt |
| 16b | zweiter Abschnitt |
| 16c | dritter Abschnitt |
| 17 | Sensor |
| 18 | Stirnseite |
| 19 | Muster |
| 19a | schwarzer Bereich |
| 19b | gelber Bereich |
| 19c | roter Bereich |
| 20 | Lagerstruktur |
| 21 | Oberseite |

22      Seitenanschlag
23      Pfeil
24      Pfeil

**Patentansprüche**

1. Verfahren zum Korrigieren einer Ausrichtung einer Schneidlage (2) aus gestapelten, blattförmigen Gut in Form von Bögen zu einer Schneidebene (5) eines Schneidmessers (7) einer Schneidmaschine (1), wobei die Schneidmaschine (1) einen Tisch (3) zur Aufnahme der Schneidlage (2) und einen Vorschubsattel (4) zum Verschieben der Schneidlage (2) in Richtung der Schneidebene (5) des Schneidmessers (6) der Schneidmaschine (1) aufweist, wobei der Vorschubsattel (4) in seiner Ausrichtung zu der Schneidebene (5) verstellbar ist zur Veränderung der Ausrichtung der an dem Vorschubsattel (4) anliegenden Schneidlage (2) zu der Schneidebene (5), wobei der jeweilige Bogen mit zumindest einer Schneidtestmarke (16) versehen ist, wobei die jeweilige Schneidtestmarke (16) eine sich in der Vorschubrichtung (X) des Vorschubsattels (4) verändernde Farbgebung aufweist, wobei das Verfahren die folgenden Verfahrensschritte aufweist:

   a) Verschieben der Schneidlage (2) mittels des Vorschubsattels (4) in Richtung der Schneidebene (5) des Schneidmessers (6), derart, dass die Schneidebene (5) die Schneidtestmarken (16) schneidet,
   b) Schneiden der Schneidlage (2) mit dem Schneidmesser (6) zur Bildung einer beschnittenen Stirnseite mit einem durch die durchschnittenen Schneidtestmarken (16) gebildeten stirnseitig sichtbaren farbigen Muster (19),
   c) Ermitteln einer Farbgebung des stirnseitig sichtbaren Musters (19),
   d) Ermitteln, ob Abweichungen der Ausrichtung der Schneidlage (2) von einer Soll-Ausrichtung vorliegen, wobei das Ermitteln anhand der Farbgebung des stirnseitig sichtbaren Musters (19) erfolgt, wobei bei Vorliegen von Abweichungen die Ausrichtung des Vorschubsattels (4) zu der Schneidebene (5) verändert wird zum Korrigieren der Ausrichtung der Schneidlage (2).

2. Verfahren nach Anspruch 1, wobei der Vorschubsattel (4) um eine senkrecht zu einer von dem Tisch (3) aufgespannten Ebene verlaufenden ersten Achse (13) drehbar ist zur Veränderung eines Drehwinkels des Vorschubsattels (4) bezüglich der Schneidebene (5) und/oder wobei der Vorschubsattel (4) um eine parallel zu der von dem Tisch (3) aufgespannten Ebene verlaufenden zweiten Achse (14) drehbar ist zur Veränderung eines Neigungswinkels des Vorschubsattels (4) bezüglich der Schneidebene (5).

3. Verfahren nach Anspruch 1 oder 2, wobei die jeweilige Schneidtestmarke (16) zumindest zwei in der Vorschubrichtung (X) des Vorschubsattels (4) hintereinander angeordnete einfarbige Abschnitte (16a, 16b, 16c) aufweist, wobei in der Vorschubrichtung (X) benachbarte Abschnitte (16a, 16b, 16c) sich in ihrer Farbe unterscheiden.

4. Verfahren nach Anspruch 3, wobei die Abschnitte (16a, 16b, 16c) in der Vorschubrichtung des Vorschubsattels (4) jeweils eine Erstreckung von 0,05 mm bis 0,2 mm aufweisen.

5. Verfahren nach Anspruch 3 oder 4, wobei in Vorschubrichtung (X) benachbarte Abschnitte in einer quer zu der Vorschubrichtung (X) verlaufenden Querrichtung (Y) zueinander versetzt angeordnet sind.

6. Verfahren nach einem der Ansprüche 1 bis 5, wobei zum Ermitteln, ob Abweichungen der Ausrichtung der Schneidlage (2) von einer Soll-Ausrichtung vorliegen, die ermittelte Farbgebung mit einer zu der Soll-Ausrichtung der Schneidlage (2) korrespondierenden Soll-Farbgebung verglichen wird, wobei bei Abweichung der ermittelten Farbgebung von der Soll-Farbgebung die Ausrichtung des Vorschubsattels (4) zu der Schneidebene (5) verändert wird.

7. Verfahren nach einem der Ansprüche 1 bis 6, wobei bei Vorliegen einer Veränderung der Farbgebung des erfassten Musters (19) in der Stapelrichtung (Z) der Schneidlage (2) eine notwendige Korrektur des Neigungswinkels des Vorschubsattels (4) ermittelt wird.

8. Verfahren nach einem der Ansprüche 1 bis 7, wobei der jeweilige Bogen mit einer ersten Schneidtestmarke (16) und einer identischen zweiten Schneidtestmarke (16) versehen ist, wobei die erste Schneidtestmarke (16) und die zweite Schneidtestmarke (16) in einer quer zu der Vorschubrichtung (X) verlaufenden Querrichtung (Y) voneinander beabstandet sind, wobei die durchschnittenen ersten Schneidtestmarken (16) ein erstes stirnseitig sichtbares Muster (19) bilden und die durchschnittenen zweiten Schneidtestmarken (16) ein zweites stirnseitig sichtbares Muster (19) bilden, wobei die Farbgebung des ersten stirnseitigen Musters (19) mit der Farbgebung des zweiten stirnseitigen Musters (19) verglichen wird und aus dem Ergebnis des Vergleichs die notwendige Korrektur des Drehwinkels des Vorschubsattels (4) ermittelt wird.

9. Verfahren nach Anspruch 8, wobei zum Ermitteln der notwendigen Korrektur des Drehwinkels des Vorschubsattels (4) auf einer bestimmten Höhe in Stapelrichtung (Z) ein Farbwert der Farbgebung des ersten Musters (19) ermittelt wird und auf derselben Höhe in der Stapelrichtung (Z) wie in dem ersten Muster (19) ein Farbwert der Farbgebung des zweiten Muster (19) ermittelt wird, wobei aus einem Vergleich des Abstands der ersten und der zweiten Schneidtestmarke (16) voneinander in der Querrichtung (Y) mit einem Abstand der Positionen der entsprechenden Farbwerte in den Schneidtestmarken (16) in Vorschubrichtung (X) die notwendige Korrektur des Drehwinkels des Vorschubsattels (4) ermittelt wird.

10. Verfahren nach einem der Ansprüche 1 bis 9, wobei das oder die stirnseitig sichtbaren Muster (19) mittels zumindest eines Bildsensors (17) erfasst werden und an eine Auswerteeinrichtung (15) übermittelt werden, wobei die Auswerteeinrichtung (15) dazu eingerichtet ist, die Farbgebung des oder der Muster (19) computergestützt zu ermitteln und/oder die notwendige Korrektur des Drehwinkels computergestützt zu ermitteln und/oder die notwendige Korrektur des Neigungswinkels des Vorschubsattels computergestützt zu ermitteln.

11. Verfahren nach Anspruch 10, wobei die Auswerteeinrichtung (15) dazu eingerichtet ist, die ermittelte Farbgebung mit der zu der Soll-Ausrichtung korrespondierenden Soll-Farbgebung zu vergleichen und aus dem Ergebnis des Vergleichs die notwendige Korrektur des Drehwinkels und/oder die notwendige Korrektur des Neigungswinkels des Vorschubsattels (4) zu ermitteln.

12. Schneidmaschine (1) zum Schneiden einer Schneidlage (2) aus gestapelten, blattförmigen Gut in Form von Bögen, wobei der jeweilige Bogen mit zumindest einer Schneidtestmarke (16) versehen ist, wobei die Schneidmaschine (1) einen Tisch (3) zur Aufnahme der Schneidlage (2), ein Schneidmesser (6) und einen Vorschubsattel (4) zum Verschieben der Schneidlage (2) in Richtung einer Schneidebene (5) des Schneidmessers (6) der Schneidmaschine (1) aufweist, wobei die jeweilige Schneidtestmarke (16) eine sich in der Vorschubrichtung (X) des Vorschubsattels (4) verändernde Farbgebung aufweist, wobei die Schneidmaschine (1) eine Verstelleinrichtung zum Verstellen einer Ausrichtung des Vorschubsattels (4) zu der Schneidebene (6) aufweist, zur Veränderung einer Ausrichtung der an dem Vorschubsattel (4) anliegenden Schneidlage (2) zu der Schneidebene (5), wobei die Schneidmaschine (1) ein System zum Ermitteln und Korrigieren etwaiger Abweichungen der Ausrichtung der Schneidlage (2) von einer Soll-Ausrichtung der Schneidlage (2) aufweist, wobei das System zumindest einen Bildsensor (17) aufweist, wobei der Bildsensor (17) dazu eingerichtet ist, nach einem Schnitt durch die Schneidtestmarken (16) ein durch die beschnittenen Schneidtestmarken (16) gebildetes stirnseitig sichtbares farbiges Muster (19) zu erfassen, wobei das System eine Auswerteeinrichtung (15) aufweist, wobei die Auswerteeinrichtung (15) dazu eingerichtet ist, anhand einer Farbgebung des erfassten Musters (19) zu ermitteln, ob Abweichungen der Ausrichtung der Schneidlage (2) von der Soll-Ausrichtung vorliegen, und wobei das System dazu eingerichtet ist, bei Vorliegen von Abweichungen durch Ansteuern der Verstelleinrichtung den Vorschubsattel (4) in seiner Ausrichtung zu der Schneidebene (5) zu verstellen zum Korrigieren der Ausrichtung der an dem Vorschubsattel (4) anliegenden Schneidlage (2) zu der Schneidebene (5).

13. Schneidmaschine nach Anspruch 12, wobei der Vorschubsattel (4) um eine senkrecht zu einer von dem Tisch (3) aufgespannten Ebene verlaufenden ersten Achse (13) drehbar ist zur Veränderung eines Drehwinkels des Vorschubsattels (4) bezüglich der Schneidebene (5) und/oder wobei der Vorschubsattel (4) um eine parallel zu der von dem Tisch aufgespannten Ebene verlaufenden zweiten Achse (14) drehbar ist zur Veränderung eines Neigungswinkels des Vorschubsattels (4) bezüglich der Schneidebene (5).

14. Schneidmaschine nach Anspruch 13 oder 14, wobei die Auswerteeinrichtung (15) dazu eingerichtet ist, das von dem Bildsensor (17) erfasste farbige Muster (19) computergestützt auszuwerten, um die notwendige Korrektur des Neigungswinkels und/oder die notwendige Korrektur des Drehwinkels computergestützt zu ermitteln.

15. Schneidmaschine nach einem der Ansprüche 12 bis 14, wobei die Auswerteeinrichtung (15) dazu eingerichtet ist, die ermittelte Farbgebung mit einer in einem Speicher der Auswerteeinrichtung (15) hinterlegten zu der Soll-Ausrichtung der Schneidlage korrespondierenden Soll-Farbgebung zu vergleichen, wobei das System dazu eingerichtet ist, basierend auf dem Ergebnis des Vergleichs die Verstelleinrichtung anzusteuern zum Korrigieren der Ausrichtung der an dem Vorschubsattel (4) anliegenden Schneidlage (2) zu der Schneidebene (5).

Fig. 1

Fig. 2

Fig. 3

Fig. 4

Fig. 5

Fig. 6

Fig. 7

Fig. 8

Fig. 9

**Fig. 10**

**Fig. 11**

Fig. 12

Europäisches
Patentamt

European
Patent Office

Office européen
des brevets

# EUROPÄISCHER RECHERCHENBERICHT

**Nummer der Anmeldung**

**EP 23 15 6396**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 4 056 336 A1 (ADOLF MOHR MASCHF GMBH & CO KG [DE]) 14. September 2022 (2022-09-14) * Absatz [0001] – Absatz [0048]; Abbildungen 1-9 * ----- | 1-15 | INV. B26D7/01 B26D7/06 B26D5/00 B26D5/32 B26D5/34 B26D1/04 G06F18/00 |
| A,D | EP 2 656 984 B1 (MOHR ADOLF MASCHF [DE]) 25. Februar 2015 (2015-02-25) * Absatz [0001] – Absatz [0048]; Abbildungen 1-9 * ----- | 1,12 | |
| A,D | DE 10 2017 112754 A1 (BAUMANN MASCHB SOLMS GMBH & CO KG [DE]) 13. Dezember 2018 (2018-12-13) * Absatz [0001] – Absatz [0053]; Abbildungen 1-13 * ----- | 1,12 | |

**RECHERCHIERTE SACHGEBIETE (IPC)**

B26D
G06V
G06F

Der vorliegende Recherchenbericht wurde für alle Patentansprüche erstellt

| Recherchenort | Abschlußdatum der Recherche | Prüfer |
|---|---|---|
| München | 3. August 2023 | Maier, Michael |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 15 6396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2023

| Im Recherchenbericht angeführtes Patentdokument | Datum der Veröffentlichung | Mitglied(er) der Patentfamilie | Datum der Veröffentlichung |
|---|---|---|---|
| EP 4056336 A1 | 14-09-2022 | KEINE | |
| EP 2656984 B1 | 25-02-2015 | EP 2656984 A1 | 30-10-2013 |
| | | US 2015122098 A1 | 07-05-2015 |
| | | WO 2013159885 A1 | 31-10-2013 |
| DE 102017112754 A1 | 13-12-2018 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2656984 B1

- DE 102017112754 A1